# EUROPEAN PATENT APPLICATION

(11) **EP 3 660 768 A1**
(43) Date of publication of application: **03.06.2020**
(21) Application number: 19212512.8
(22) Date of filing: 29.11.2019
(51) Int. Cl.: G06Q 20/18, B41J 11/00, G07F 9/10, G07F 19/00, G07G 1/00

(54) **INTERACTIVE KIOSK HAVING SELF-ALIGNING PRINTER PAPER DISPENSING CHUTE**

(30) Priority: 29.11.2018 US 201816205100
(71) Applicant: Zivelo Inc., Scottsdale, AZ 85251 (US)
(72) Inventor: SAMUELSON, Patrick, Scottsdale, AZ Arizona 85251 (US)
(74) Representative: Leonhard, Frank Reimund

(57) **Abstract**

A chute assembly (312,401,826,1100,1202,1302) for use in a kiosk (100,200,700) which includes a pivotable panel door (106,204,306,402,502,602,820,902) and an internal printer (318) of the type including a printer mouth (404,504,604,828) defining a paper path (405,605), the chute assembly (312, ...) comprises a chute top lip (314,406,920,1114,1310), a chute bottom lip (316,408,508,922,1312) and a floating fastener (407,1007,1304). The floating fastener (407,1007,1304) is configured to secure the chute to the inside of the panel door (106, ...) in a manner which allows the chute to self-align to the paper path (405,605) upon contacting the printer mouth (404, ...), when the panel door (106, ...) pivots into a closed position.

## Description

The present invention relates, generally, to receipt dispensers used in kiosks and, more particularly, to a floating external printer chute configured to self-align with an internal printer module.

Printers such as the Epson TM-T88V point-of-sale (POS) printer module are often deployed inside a housing such as a kiosk. Prior art printer modules typically abut against the inside kiosk door proximate the discharge slot. Kiosk down time associated with repairs due to printer paper jams and paper path misalignment can be costly, and repairs can be cumbersome, particularly when the hardware components along the paper path are misaligned.

Systems and methods are thus needed which overcome the limitations of presently known receipt delivery assemblies.

**A problem to be solved** by the invention is to provide improved Kiosks and associated assemblies.

**The problem is solved** by a chute assembly according to claim 1, a method according to claim 12 and a kiosk according to claim 15.

Various embodiments of the present invention relate to improved kiosks and methods for their manufacture.

In an embodiment, a printer chute assembly is attached to the inside door panel, and includes bottom and top chute lips configured to enter the mouth region of the printer to intercept the paper downstream of the cutter but before the paper completely exits the printer mouth.

The bottom lip extends downwardly into the printer mouth to ensure that the paper enters the chute. A floating chute configuration allows the chute to align with the paper path of the printer when the printer mouth enters the region between the upper and lower lips of the chute. The floating mechanism allows the chute to be adjusted left-to-right as well as up-and-down to ensure alignment with the printer mouth.

The bottom lip of the chute may include ribs to reduce friction between the paper and the chute surface (less total surface area of contact).

A preferred embodiment of the chute comprises two injection molded parts fastened together. The studs, which secure the chute to the inside of the door, are threaded into the inside panel and covered up by an outside panel.

As the panel door is rotated closed, the underside of the lower lip of the chute contacts the leading edge of the top of the bottom mouth surface, and as the door closes the chute is urged upwardly into alignment with the print module mouth. In prior art systems, there is either minimal or no contact between the lower chute lip and the bottom surface of the printer mouth.

Chute mounting studs are journaled through the mounting flange of the chute, and spacers define an axial slop in the z dimension (orthogonal to the plane of the kiosk door), which facilitates alignment of the chute in the x and y dimensions.

The chute is configured to engage the printer mouth such that, if the paper clears the printer mouth, it will clear the chute. That is, if the paper clears the printer, it will necessarily clear the chute and exit the discharge slot.

Various other embodiments, aspects and features are of the present invention are described in more detail below. Additional features and characteristics will become apparent from the subsequent detailed description and the appended claims, taken in conjunction with the accompanying drawings and this background section.

Exemplary embodiments will hereinafter be described in conjunction with the following drawing figures, wherein like numerals denote like elements, and:
- FIG. 1: is a perspective view of a kiosk including an internal printer and an external receipt slot in accordance with exemplary embodiments of the present invention;
- FIGS. 2: is a kiosk showing the front panel door removed to reveal an internal printer region in accordance with exemplary embodiments of the present invention;
- FIG. 3: is a perspective view of a kiosk with the front panel door open, showing a floating printer chute on the inside of the door configured to engage the paper output of a printer when the door is closed in accordance with exemplary embodiments of the present invention;
- FIG. 4: is a schematic representation of a floating printer chute mounted on the inside of a kiosk panel door, and a mating printer mouth mounted within the kiosk, showing the panel door in the open position in accordance with exemplary embodiments of the present invention;
- FIG. 5: is a schematic representation of the floating printer chute of FIG. 4, with the panel door in the partially closed position and illustrating initial engagement between the floating printer chute and the printer mouth in accordance with exemplary embodiments of the present invention;
- FIG. 6: is a schematic representation of the floating printer chute of FIGS. 4 and 5, with the panel door in the fully closed position and illustrating the floating printer chute fully inserted into the printer mouth, and also illustrating the printer chute extended upwardly from the resting position shown in FIGS. 4 and 5 in accordance with exemplary embodiments of the present invention;
- FIG. 7: is a front elevation view of a kiosk showing the receipt discharge slot mounted in the component door panel in accordance with exemplary embodiments of the present invention;
- FIG. 8: is a cross section view taken along line C - C in FIG. 7, showing the printer chute fully engaged within the printer mouth in accordance with exemplary embodiments of the present invention;
- FIG. 9: is a close up view of the printer chute upper and lower lips disposed within the printer mouth region in accordance with exemplary embodiments of the present invention;
- FIG. 10: is a close up schematic view of the printer chute assembly mounted to the inside of the component panel door in accordance with exemplary embodiments of the present invention;
- FIG. 11: is an exploded view of the printer chute assembly shown in FIG. 10, illustrating a lower lip extending from a flange, and an upper lip configured for attachment to the flange in accordance with exemplary embodiments of the present invention;
- FIG. 12: is an elevation view of the inside of a kiosk door illustrating a printer chute assembly attached to the inside of a component panel door in accordance with exemplary embodiments of the present invention;
- FIG. 13: is a cross section view taken along line B - B of FIG 12 illustrating gaps for facilitating alignment of the printer chute within the printer mouth in accordance with exemplary embodiments of the present invention; and
- FIG. 14: is a cross section view taken along line C - C of FIG 12 in accordance with exemplary embodiments of the present invention.

The following detailed description is merely exemplary in nature and is not intended to limit the invention or the application and uses of the invention. Furthermore, there is no intention to be bound by any theory presented in the preceding background or the following detailed description.

Various embodiments of the following discussion relate to interactive kiosks and other systems equipped with an internal print module and configured to discharge a receipt or other printed document. In various embodiments, a printer chute is attached to an inside surface of a component door. As the component door closes, the printer chute engages the discharge port (mouth) of an internal printer module. The printer chute is configured to "float" relative to the printer mouth; that is, as the door closes, the chute engages the printer mouth and slides up-and-down and side-to-side as needed to self-align with the printer. In this way, the lips of the chute may be optimally positioned with respect to the path of the paper discharged by the printer. By positioning the chute lips in the paper path immediately downstream of the printer discharge mouth, paper jams may be avoided thereby minimizing system down time.

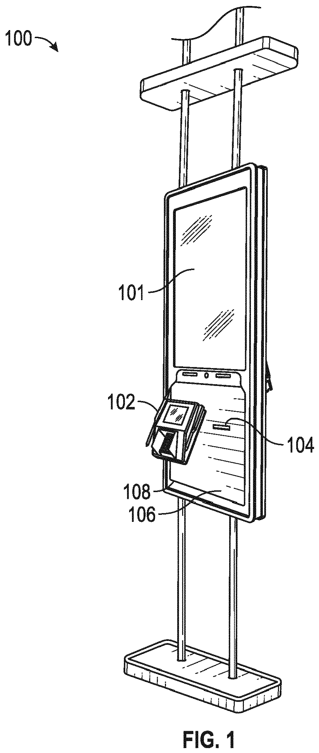

Referring now to FIG 1, an exemplary customer ordering kiosk 100 includes a display 101, a component panel door 106 configured to pivot about a hinge 108, a payment module 102, and a receipt discharge slot 104.

In accordance with one aspect of the present invention, various components may be removably installed within a space bounded by the component panel door. In this way, various components such as a printer, payment module, ADA pad, speaker, panic button, scanner, call assist button (typically tactile (braille) for the blind), and other functional modules that the user interacts with may be reconfigured while only having to replace a single, integral component door which houses the replaceable components, as opposed to having a plurality of component doors for a plurality of components.

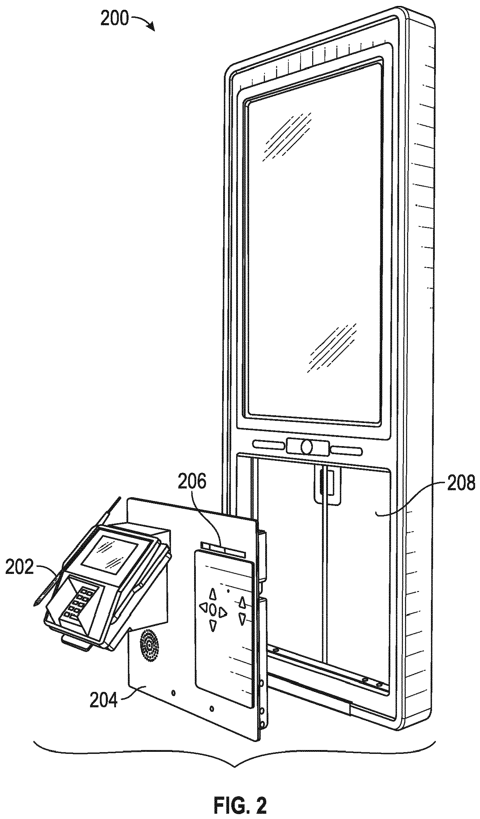

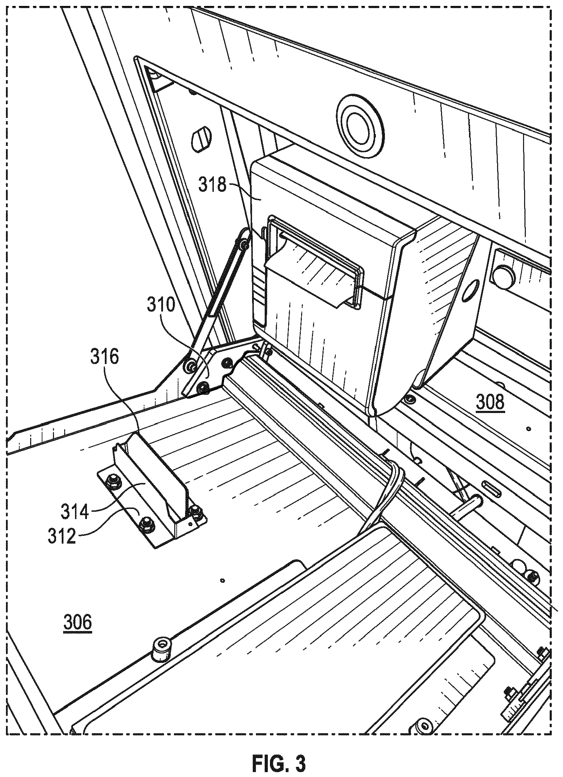

Referring now to FIG 2, an exemplary kiosk 200 shows a front panel door 204 removed to reveal an internal printer region 208 in which a printer module (not shown in FIG. 2) is mounted. The panel door 204 includes a payment module (e.g., a point-of-sale (POS) device) 202 and a printer receipt discharge slot 206. The manner in which the printer module interacts with the discharge slot will now be described in conjunction with FIGS. 3 - 9.

FIG. 3 is a perspective view of a kiosk depicting a panel door 306 enclosing a printer region 308 having a printer module 318 mounted therein. The panel door 306 is pivotably mounted at a hinge 310. In the embodiment shown in FIG. 3, the front panel door is open to reveal a floating printer chute 312 mounted on the inside of the door, and configured to engage the paper output of the printer when the door is swung into the closed position. In particular, a top lip 314 and a bottom lip 316 may be positioned above and below the paper path of the receipt as it is discharged from the printer module, thereby ensuring that the paper is directed through the external discharge slot on the outside of the panel door.

In accordance with preferred embodiments, the floating printer chute 312 may be mounted in a manner which allows the chute to align itself with the paper discharge mouth of the printer module as the panel door closes, bringing the printer chute into contact with the printer module.

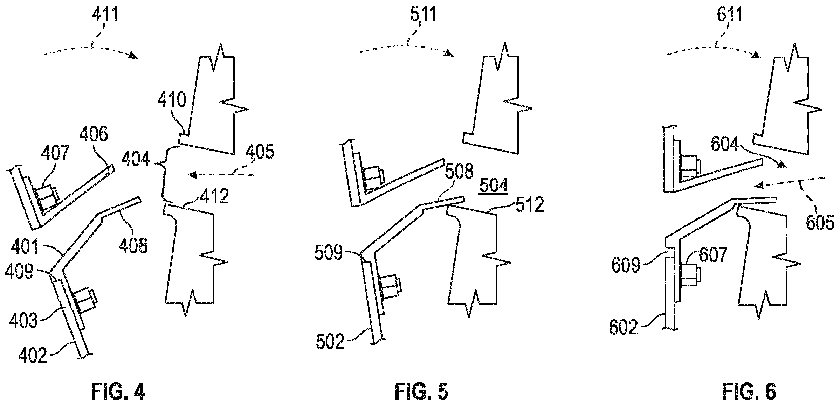

FIG. 4 illustrates a panel door 402 in the open position, being pivoted along an arc 411 towards the closed position. As the door closes, a printer chute 401 mounted to the inside of the panel door is brought into alignment with a paper path 405 of a printer module mounted inside the kiosk. Specifically, the printer chute is urged into a position proximate a mating printer mouth 404 having a top lip 410 and a bottom lip 412. In accordance with an embodiment, the chute is mounted to the door using a floating attachment mechanism 407, which allows an upper lip 406 and/or a lower lip 408 of the chute to slide up, down, left, and/or right in a plane substantially parallel to the panel door to permit precise alignment of the printer chute relative to the paper path of the printer module upon closing of the panel door. In a particularly preferred embodiment, the chute 401 rests on a ledge 403 resulting in a zero or near zero gap 409 between the chute and the ledge. As the door closes, the bottom surface of lip 408 contacts a top surface of the lip 412, whereupon the chute is urged upwardly (and perhaps incrementally to the left or right, as needed) to ensure optimum alignment of the chute relative to the paper path, as described in greater detail below.

FIG. 5 is a schematic representation of the floating printer chute of FIG. 4, with the panel door 502 pivoted along arc 511 into the partially closed position and illustrating initial engagement between the bottom lip 508 of the floating printer chute and a bottom surface 512 of the printer mouth 504. Note that upon initial engagement, the gap 509 may still exhibit a zero or near zero dimension.

FIG. 6 depicts the floating printer chute of FIGS. 4 and 5 with the panel door 602 pivoted along arc 611 into the fully closed position, illustrating the floating printer chute fully inserted into the printer mouth 604 and into alignment with the paper path 605. A gap 609 appears between the chute assembly and its supporting structure 607 as the chute is extended upwardly from the resting position shown in FIGS. 4 and 5 into its aligned position upon closing of the panel door.

In the illustrated embodiments a panel door opens from beneath the printer. Alternatively, the panel door may be configured to rotating from any direction and to key off any surface on the printer chute. Indeed, the present invention contemplates any arrangement which allows the chute to float and/or which provides a sliding mechanism that allows the chute to align with the printer output as the panel containing the chute is placed into the closed position.

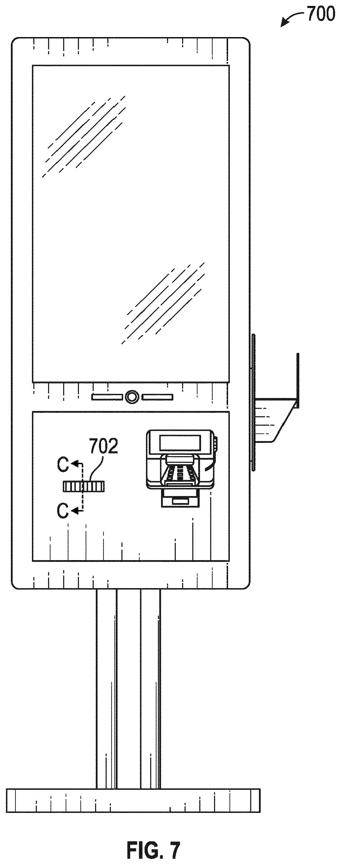

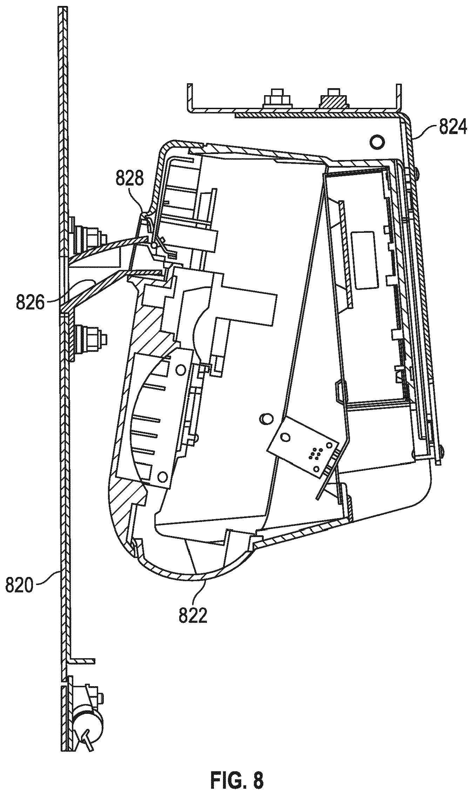

Turning now to FIGS. 7 and 8, FIG. 7 is a front elevation view of a kiosk 700 showing a receipt discharge slot 702 mounted in the component door panel. FIG. 8 is a cross section view taken along line C - C in FIG. 7, showing the printer chute 826 (mounted to the panel door 820) fully engaged within the printer mouth 828 of the printer module 822 (mounted to the kiosk chassis 824).

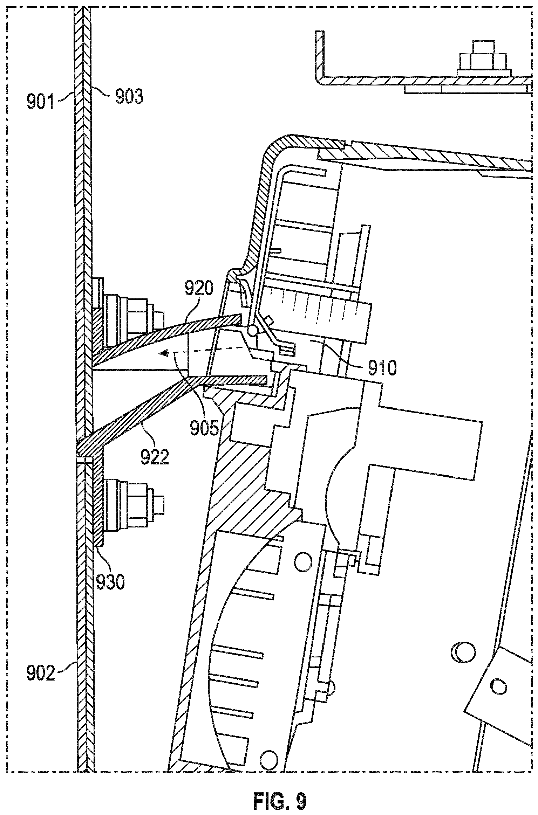

FIG. 9 is a close up view of the printer chute upper and lower lips 920, 922 disposed within the printer mouth region defining a paper path 905 downstream of an internal paper cutter 910. In a preferred embodiment, the panel door 902 may comprise a first (inside) layer 903 to which the chute is mounted, and a second (outside) layer 901 which hides the mounting fasteners 930 from view.

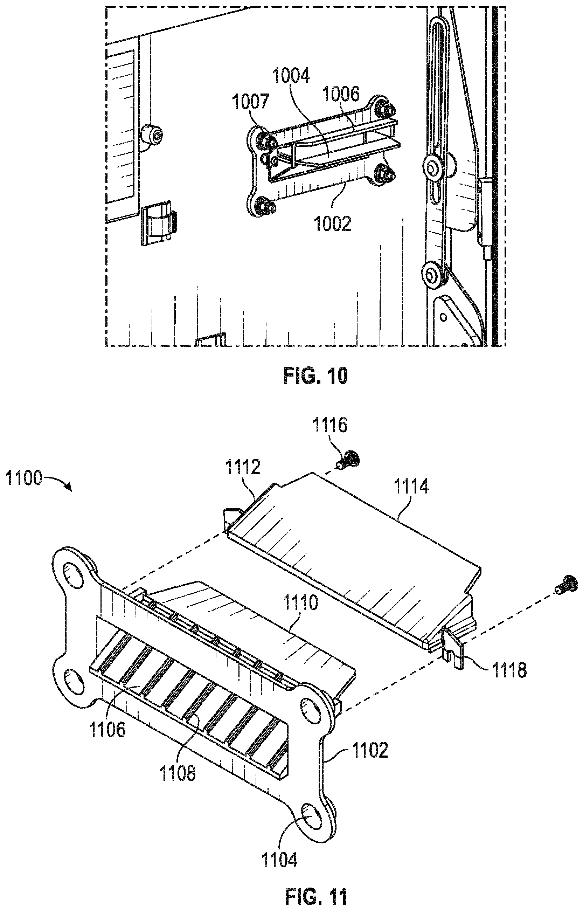

FIG. 10 is a close up schematic view of a printer chute assembly mounted to the inside of the component panel door. The assembly includes a flange 1002 mounted to the door with respective fasteners 1007, the chute assembly further comprising an upper lip section 1006 and a lower lip section 1004.

FIG. 11 is an exploded view of an exemplary printer chute assembly 1100 of the type generally shown in FIG. 10, illustrating a lower lip 1110 extending from a flange 1102 having a plurality of floating attachment holes 1104, and an upper component 1112 having an upper lip 1114 configured for attachment to the flange at respective shoulders 1118. In the illustrated embodiment, the top side of the bottom lip 1110 includes alternating planes 1106 and ridges 1108 to reduce friction between the lower lip and the paper receipt.

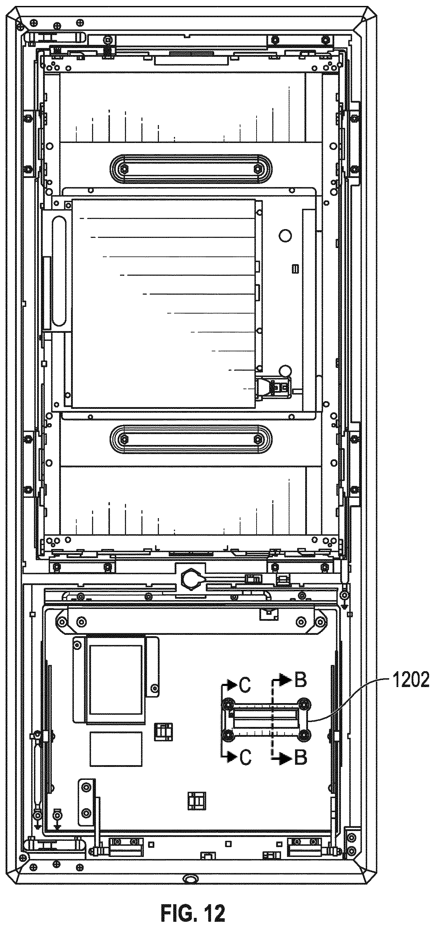

FIG. 12 is an elevation view of the inside of a kiosk door illustrating a printer chute assembly 1202 attached to the inside of a component panel door using fasteners which permit the chute to "float" into alignment with the interior printer module mouth when the door is closed.

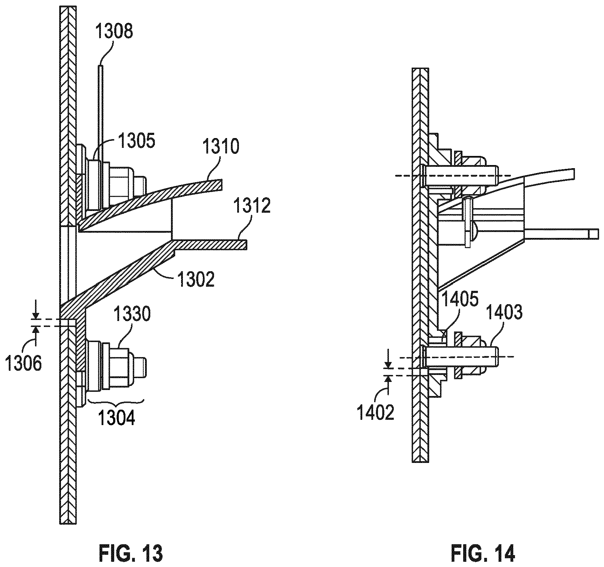

FIG. 13 is a cross section view taken along line B - B of FIG 12 illustrating various float gaps for facilitating alignment of a printer chute 1302 with respect to (e.g., within) the printer mouth (not shown ion FIG. 13). The printer chute 1302 includes an upper lip 1310 and a lower lip 1312; the chute is attached to the panel door via one or more floating fasteners 1304. In the illustrated embodiment, a spacer 1305 is configured to limit the axial travel of a nut 1330 when the chute is attached to the door, resulting in an axial gap 1308 on the order of .005 to .05 inches (0,13 mm to 1,27 mm), and preferably about .02 inches (0,51 mm). The axial gap 1308 allows one or both of the chute upper and/or lower lips to move up, down, and/or side-to-side in a plane parallel to the panel door to thereby facilitate alignment of the chute relative to the printer mouth when the panel door is closed. When the panel door is closed and the lower lip of the chute rises up into the printer mouth (as shown in in FIG. 6), the chute rises up and reveals a gap 1306 (e.g. in the range of .01 to .1 inches (0,25 mm to 2,54 mm), and preferably about .06 inches (1,52 mm)) between a shoulder of the chute flange and the surface upon whit it rests when the door is open.

FIG. 14 is a cross section view taken along line C - C of FIG 12, illustrating a cylindrical gap 1402 (in the range of .01 to .1 inches (0,25 mm to 2,54 mm), and preferably about .06 inches (1,52 mm)) extending radially between the fastener shaft 1403 and the fastener hole 1405 (generally analogous to the fastener hole 1104 shown in FIG. 11).

It can thus be appreciated that a floating fastener may be employed to facilitate optimum alignment of the printer chute with respect to the printer mouth, without the need for manual adjustment by or a line of sight from the operator.

An improved kiosk is thus provided which includes: a hinged panel door having an external discharge slot; a printer mounted to the kiosk chassis inside the panel door; a print paper chute assembly inside the panel door and configured to engage the printer mouth when the door is closed; and a floating mount mechanism configured to movably adjust the chute into alignment with the printer paper path when the door is closed.

A chute assembly is provided for use in a kiosk which includes a pivotable panel door and an internal printer of the type including a printer mouth defining a paper path. The chute assembly includes: a chute top lip; a chute bottom lip; and a floating fastener configured to secure the chute to the inside of the panel door in a manner which allows the chute to self-align to the paper path upon contacting the printer mouth when the panel door pivots into a closed position.

In an embodiment, the chute assembly further includes a flange from which the bottom lip extends, and a shoulder configured to facilitate securing the top lip to the flange.

In an embodiment, the flange includes a through-hole, and the floating fastener includes a fastener shaft configured for removable extension through the through hole, a spacer, and a tightening nut.

In an embodiment, the spacer is configured to yield an axial gap between the tightening nut and the panel door.

In an embodiment, the axial gap is in the range of .01 to .05 inches (0,25 mm to 1,27 mm).

In an embodiment, the axial gap is about .02 inches (0,51 mm).

In an embodiment, the through-hole is configured to yield a cylindrical gap around the perimeter of the fastener shaft.

In an embodiment, the cylindrical gap has a thickness in the range of .01 to .1 inches (0.25 mm to 2,54 mm).

In an embodiment, the cylindrical gap has a thickness of about .06 inches (1,52 mm).

In an embodiment: the printer mouth comprises a lower surface; the chute bottom lip comprises a bottom surface; and the bottom surface of the chute bottom lip is configured to contact the printer mouth lower surface when the panel door is in a nearly closed position.

In an embodiment, the cylindrical gap is configured to facilitate upward movement of the chute assembly as the panel door is urged into a closed position to thereby align the chute assembly with the printer mouth.

In an embodiment, the axial gap is configured to facilitate movement of the through-hole relative to the fastener shaft when the panel door is moved into the closed position.

In an embodiment, the flange comprises a shoulder and the panel door comprises a ledge, and further wherein a slidable gap formed between the shoulder and the ledge in response to sliding contact between the bottom surface of the chute bottom lip and the printer mouth lower surface when the panel door is moved into the closed position.

In an embodiment, the printer mouth defines a paper path, and further wherein the chute top lip is disposed above the paper path and the chute bottom lip is disposed below the paper path when the panel door is closed.

In a kiosk of the type including a receipt discharge slot disposed on an outside surface of a hinged panel door proximate an internal region, a paper chute mounted to an inside surface of the door, and a printer module mounted within the internal region, the printer module having a printer mouth characterized by an upper surface and a lower surface defining a paper path therebetween, a method is provided for positioning a paper chute relative to the printer mouth. The method includes the steps of: pivoting the door about an arc from an open position to a nearly closed position; continuing to pivot the door along the arc until a bottom lip of the paper chute contacts the lower surface of the printer mouth; and further pivoting the door along the arc to produce sliding engagement between the bottom lip of the paper chute and the lower surface of the printer mouth.

In an embodiment, the method further includes pivoting the door into a fully closed position, to thereby dispose a top lip of the paper chute above the paper path and the bottom lip of the paper chute below the paper path.

In an embodiment, the method further includes causing the paper chute to slide upwardly relative to the door in response to said sliding engagement; and causing the paper chute to slide in a substantially horizontal direction relative to the door in response to said sliding engagement.

A user-accessible kiosk is provided which includes an internal printer of the type having a printer opening through which paper is dispensed. The kiosk includes: a frame including a printer cavity; a door rotatably coupled to the frame, the door including an outer surface, an inner surface, and a door slot; a self-adjusting printer chute assembly loosely attached to the inner surface of the door adjacent to the door slot, the self-adjusting printer chute assembly having an upper paper guide structure and a lower paper guide structure, the lower paper guide structure having an upper surface and a lower surface.

In an embodiment, when the door is rotated from an open position to a closed position, the lower surface of the lower paper guide structure slideably contacts an edge of the printer opening such that the self-adjusting printer chute assembly translates relative to the inner surface of the door, in opposition to a force of gravity, to substantially align with the printer opening and provide a path for the paper to be dispensed through the door slot.

In an embodiment, the self-adjusting printer chute assembly is loosely attached to the inner surface of the door via a bolt extending through a flange opening in the self-adjusting printer chute assembly; and the bolt has a shank portion that is smaller than the flange opening to thereby define a circumferential gap.

In an embodiment, the door is rotatably coupled to the frame at a location below the door slot.

As used herein, the word "exemplary" means "serving as an example, instance, or illustration." Any implementation described herein as "exemplary" is not necessarily to be construed as preferred or advantageous over other implementations, nor is it intended to be construed as a model that must be literally duplicated.

While the foregoing detailed description will provide those skilled in the art with a convenient road map for implementing various embodiments of the invention, it should be appreciated that the particular embodiments described above are only examples, and are not intended to limit the scope, applicability, or configuration of the invention in any way. To the contrary, various changes may be made in the function and arrangement of elements described without departing from the scope of the invention.

## Claims

1. **Chute assembly (312,401,826,1100,1202,1302)** for use in a kiosk (100,200,700) which includes a pivotable panel door (106,204,306,402,502,602,820,902) and an internal printer (318) of the type including a printer mouth (404,504,604,828) defining a paper path (405,605), the chute assembly (312, ...) comprising:
a chute top lip (314,406,920,1114,1310);
a chute bottom lip (316,408,508,922,1312); and
a floating fastener (407,1007,1304) configured to secure the chute to the inside of the panel door (106, ...) in a manner which allows the chute to self-align to the paper path (405,605) upon contacting the printer mouth (404, ...) when the panel door (106, ...) pivots into a closed position.

2. Chute assembly (312, ...) of claim 1, further comprising a flange (1002,1102) from which the bottom lip (316, ...) extends, and a shoulder (1118) configured to facilitate securing the top lip (314, ...) to the flange (1002,1102).

3. Chute assembly (312, ...) of claim 2, wherein the flange (1002,1102) includes a through-hole (1104,1405), and the floating fastener (407, ...) includes a fastener shaft configured for removable extension through the through-hole (1104,1405), a spacer (1305), and a tightening nut (1330).

4. Chute assembly (312, ...) of claim 3, wherein the spacer (1305) is configured to yield an axial gap (1308) between the tightening nut (1330) and the panel door (106, ...).

5. Chute assembly (312, ...) of claim 4, wherein the axial gap (1308) is in the range of 0,25 mm to 1,27 mm, preferably the axial gap (1308) is about 0,51 mm.

6. Chute assembly (312, ...) of claim 4, wherein the through-hole (1104,1405) is configured to yield a cylindrical gap (1306,1402) around the perimeter of the fastener shaft (1403), preferably the cylindrical gap (1306,1402) has a thickness in the range of 0,25 mm to 2,54 mm, more preferably the cylindrical gap (1306,1402) has a thickness of about 1,52 mm.

7. Chute assembly (312, ...) according to any one of claims 1 to 6, wherein:
the printer mouth (404, ...) comprises a lower surface;
the chute bottom lip (316, ...) comprises a bottom surface; and
the bottom surface of the chute bottom lip (316, ...) is configured to contact the printer mouth lower surface when the panel door (106, ...) is in a nearly closed position.

8. Chute assembly (312, ...) according to any one of claims 1 to 7, wherein the cylindrical gap is configured to facilitate upward movement of the chute assembly as the panel door (106, ...) is urged into a closed position to thereby align the chute assembly with the printer mouth (404, ...).

9. Chute assembly (312, ...) according to any one of claims 1 to 8, wherein the axial gap (1308) is configured to facilitate movement of the through-hole (1104,1405) relative to the fastener shaft when the panel door (106, ...) is moved into the closed position.

10. Chute assembly (312, ...) according to any one of claims 1 to 9, wherein the flange (1002,1102) comprises a shoulder (1118) and the panel door (106, ...) comprises a ledge, and further wherein a slidable gap formed between the shoulder (1118) and the ledge in response to sliding contact between the bottom surface of the chute bottom lip (316, ...) and the printer mouth lower surface when the panel door (106, ...) is moved into the closed position.

11. Chute assembly (312, ...) according to any one of claims 1 to 10, wherein the printer mouth (404, ...) defines the paper path (405,605), and further wherein the chute top lip (314, ...) is disposed above the paper path (405,605) and the chute bottom lip (316, ...) is disposed below the paper path (405,605) when the panel door (106, ...) is closed.

12. **Method of positioning a paper chute (312,401,826,1100,1202,1302) relative to a printer mouth (404,504,604,828)** in a kiosk (100,200,700) of the type including a receipt discharge slot disposed on an outside surface of a hinged panel door (106,204,306,402,502,602,820,902), the method comprising the steps of:
pivoting the door (106, ...) about an arc (411,511,611) from an open position to a nearly closed position;
continuing to pivot the door (106, ...) along the arc (411, ...) until a bottom lip (316,408,508,922,1312) of the paper chute (312, ...) contacts a lower surface of the printer mouth (404, ...); and
further pivoting the door (106, ...) along the arc (411, ...) to produce sliding engagement between the bottom lip (316, ...) of the paper chute (312, ...) and the lower surface of the printer mouth (404, ...).

13. Method of claim 12, further comprising:
pivoting the door (106, ...) into a fully closed position, to thereby dispose a top lip (314,406,920,1114,1310) of the paper chute (312, ...) above the paper path (405,605) and the bottom lip (316, ...) of the paper chute (312, ...) below the paper path (405,605); and/or
causing the paper chute (312, ...) to slide:
upwardly relative to the door in response to said sliding engagement; and
in a substantially horizontal direction relative to the door in response to said sliding engagement.

14. Method of claim 12 or 13, wherein the kiosk (100, ...) includes the receipt discharge slot disposed on the outside surface of the hinged panel door (106, ...) proximate an internal region, the paper chute (312, ...) mounted to an inside surface of the door (106, ...), and a printer module (318) mounted within the internal region, the printer module (318) having the printer mouth (404, ...) **characterized by** an upper surface and a lower surface defining a paper path (405,605) therebetween.

15. **User-accessible kiosk (100,200,700)** including an internal printer (318) of the type having a printer opening through which paper is dispensed, the kiosk (100, ...) comprising:
a frame including a printer cavity;
a door (106, 204,306,402,502,602,820,902) rotatably coupled to the frame, the door (106, ...) including an outer surface, an inner surface, and a door slot;
a self-adjusting printer chute assembly (312,401,826,1100,1202,1302) loosely attached to the inner surface of the door (106, ...) adjacent to the door slot, the self-adjusting printer chute assembly (312, ...) having an upper paper guide structure (314,406,920,1114,1310) and a lower paper guide structure(316,408,508,922,1312), the lower paper guide structure (316, ...) having an upper surface and a lower surface;
wherein, when the door (106, ...) is rotated from an open position to a closed position, the lower surface of the lower paper guide structure slideably contacts an edge of the printer opening such that the self-adjusting printer chute assembly (312, ...) translates relative to the inner surface of the door (106, ...), in opposition to a force of gravity, to substantially align with the printer opening and provide a path for the paper to be dispensed through the door slot.

16. Kiosk (100, ...) of claim 15, wherein:
the self-adjusting printer chute assembly (312, ...) is loosely attached to the inner surface of the door (106, ...) via a bolt extending through a flange opening in the self-adjusting printer chute assembly (312, ...), preferably the door (106, ...) is rotatably coupled to the frame at a location below the door slot; and
the bolt has a shank portion that is smaller than the flange opening to thereby define a circumferential gap.

17. Kiosk (100, ...) of claim 15 or 16, wherein the self-adjusting printer chute assembly (312, ...) further comprises a floating fastener (407,1007,1304) configured to secure the self-adjusting printer chute assembly (312, ...) to the inside of the door (106, ...) in a manner which allows the self-adjusting printer chute assembly (312, ...) to self-align to a paper path (405,605) upon contacting a printer mouth (404,504,604,828) of the internal printer (318) when the door (106, ...) pivots into a closed position.
